# EUROPÄISCHE PATENTSCHRIFT

(11) **EP 2 004 749 B1**
(45) Veröffentlichungstag und Bekanntmachung des Hinweises auf die Patenterteilung: **25.07.2012**
(21) Anmeldenummer: 07727332.4
(22) Anmeldetag: 26.03.2007
(51) Int. Cl.: C08L 67/04, C08L 33/08, C08L 33/10, C08F 283/01, C08F 290/06, C08F 290/14, C08G 81/02

(54) **FORMGEDÄCHTNISPOLYMER MIT POLYESTER- UND POLYACRYLATSEGMENTEN UND VERFAHREN ZU SEINER HERSTELLUNG UND PROGRAMMIERUNG**
SHAPE MEMORY POLYMER WITH POLYESTER AND POLYACRYLATE SEGMENTS AND PROCESS FOR ITS PRODUCTION AND PROGRAMMING
POLYMÈRE À MÉMOIRE DE FORME COMPRENANT DES SEGMENTS POLYESTER ET POLYACRYLATE ET PROCÉDÉS POUR LE PRÉPARER ET LE PROGRAMMER

(30) Priorität: 12.04.2006 DE 102006017759
(43) Veröffentlichungstag der Anmeldung: 24.12.2008
(73) Patentinhaber: Helmholtz-Zentrum Geesthacht Zentrum für Material- und Küstenforschung GmbH, 21502 Geesthacht (DE)
(72) Erfinder: KELCH, Steffen, 8102 Oberengstringen (CH); LENDLEIN, Andreas, 14167 Berlin (DE); BELLIN, Ingo, 68159 Mannheim (DE)
(74) Vertreter: Reinstädler, Diane
(86) Internationale Anmeldenummer: PCT/EP2007/052859
(87) Internationale Veröffentlichungsnummer: WO 2007/118766

(56) Entgegenhaltungen:
- EP-A- 1 338 613
- WO-A-01/91822
- WO-A-2004/033539
- WO-A-2005/028534
- US-A- 6 160 084
- US-A1- 2005 119 733
- US-A1- 2006 033 362
- FURCH M ET AL: "Synthesis and characterisation of copolymers of methyl acrylate and poly(glycolide) macromonomers" POLYMER, ELSEVIER SCIENCE PUBLISHERS B.V, GB, Bd. 39, Nr. 10, Mai 1998 (1998-05), Seiten 1977-1982, XP004108245 ISSN: 0032-3861
- EGUIBURU J L ET AL: "Blends of amorphous and crystalline polylactides with poly(methyl methacrylate) and poly(methyl acrylate): a miscibility study" POLYMER, ELSEVIER SCIENCE PUBLISHERS B.V, GB, Bd. 39, Nr. 26, Dezember 1998 (1998-12), Seiten 6891-6897, XP004138379 ISSN: 0032-3861
- JOHNSON R M ET AL: "IRON TRIS(BIPYRIDINE)-CENTERED STAR BLOCK COPOLYMERS: CHELATION OF TRIBLOCK MACROLIGANDS GENERATED BY ROP AND ATRP" MACROMOLECULES, ACS, WASHINGTON, DC, US, Bd. 37, Nr. 8, 20. April 2004 (2004-04-20), Seiten 2718-2727, XP001196167 ISSN: 0024-9297
- LIU G., DING X., CAO Y., ZHENG Z., PENG Y.: "Novel shape-memory polymer with two transition temperatures" MACROMOLECULAR RAPID COMMUNICATIONS, Bd. 26, 2005, Seiten 649-652, XP002437004 in der Anmeldung erwähnt
- JIA Z., ZHOU Y., YAN D.: "Amphiphilic Star-block Copolymers based on a Hyperbranched Core: Synthesis and Supramolecular Self-Assemblys" JOURNAL OF POLYMER SCIENCE : PART A; POLYMER CHEMISTRY, Bd. 43, 2005, Seiten 6534-6544, XP002437005
- JAKUBOWSKI W., MATYJASZEWSKI K.: "Activator generated by electron transfer for atom transfer radical polymerization" MACROMOLECULES, Bd. 38, 2005, Seiten 4139-4146, XP002437006
- LENOIR S., RIVA R., LOU X., DETREMBLEUR CH., JEROME R., LECOMTE PH.: "Ring-Opening Polymerization of alpha-caprolactone and chemical modification of poly(alpha-chloro-e-caprolactone) by atom transfer radical processes" MACROMOLECULES, Bd. 37, 2004, Seiten 4055-4061, XP002437007
- DEGIRMENCI M., HIZAL G., YAGCI Y.: "Synthesis and characterization of macrophotoinitiators of poly(e-caprolactone) and their use in block copolymerization" MACROMOLECULES, Bd. 35, 2002, Seiten 8265-8270, XP002437008
- ANNETTE M SCHMIDT: "Bioabbaubare Polymernetzwerk-Systeme mit Formgedächtniseffekt und kristallisierbarem Schaltsegment" DISSERTATION, 6. Juni 2002 (2002-06-06), Seiten 1-134, XP002437009 Aachen
- NAOHISA T., KAZUHIRO B., SHINYA T., TOMOYUKI K.: "Synthesis of poly(methylacrylate-b-epsilon-caprolactone ) and application to compatibilizer for poly(l-lactide)/poly( epsilon-caprolactone) blend system" MATERIALS TRANSACTIONS, Bd. 46, Nr. 12, 2005, Seiten 2668-2672, XP009084882

## Beschreibung

Die Erfindung betrifft ein Formgedächtnispolymer, das - neben einer permanenten Form - mindestens zwei temporäre Formen speichern kann, ein Verfahren zu seiner Herstellung sowie ein Verfahren zu seiner Formprogrammierung.

Im Stand der Technik sind so genannte Formgedächtnispolymere oder SMPs (shape memory polymers) bekannt, die bei Induktion durch einen geeigneten Stimulus einen Formübergang von einer temporären Form in eine permanente Form entsprechend einer vorherigen Programmierung zeigen. Am häufigsten ist dieser Formgedächtniseffekt thermisch stimuliert, das heißt, bei Erwärmung des Polymermaterials über die definierte Übergangstemperatur findet die durch Entropieelastizität angetriebene Rückstellung statt. Formgedächtnispolymere sind in der Regel Polymernetzwerke, bei denen chemische (kovalente) oder physikalische (nicht kovalente) Vernetzungsstellen die permanente Form bestimmen. Die Programmierung erfolgt, indem oberhalb der Übergangstemperatur eines Schaltsegmentes das Polymermaterial deformiert und anschließend unter Aufrechterhaltung der Deformationskräfte unter diese Temperatur abgekühlt wird, um die temporäre Form zu fixieren. Erneute Erwärmung oberhalb der Übergangstemperatur führt zu einem Phasenübergang und Wiederherstellung der ursprünglichen permanenten Form.

Darüber hinaus sind in jüngerer Zeit auch Polymernetzwerke beschrieben worden, die zwei Schaltsegmente mit unterschiedlichen Übergangstemperaturen aufweisen.

So beschreibt EP 1 362 879 A Formgedächtnispolymere (in diesem Fall interpenetrierende Netzwerke IPNs), die aus einer kovalent vernetzten Polymerkomponente, insbesondere auf Basis von Caprolacton-, Lactid-, Glycolid- oder p-Dioxanoneinheiten, und einer nicht kovalent vernetzten Polyesterurethankomponente bestehen. Das Polymer kann zwei temporäre Formen speichern, wobei Übergangstemperaturen um 50 und 90°C beschrieben werden.

Auch aus Liu et al. (Macromol. Rap. Comm. 26, 2005, 649ff) ist ein SMP (semiinterpenetrierendes Netzwerk SIPN) bekannt, bestehend aus Polymethylmethacrylateinheiten (PMMA) und Polyethylenglycoleinheiten (PEG), das ebenfalls zwei Übergangstemperaturen (bei 40 und 86°C) aufweist. Das dort beschriebene Programmierverfahren erlaubt jedoch nur die Speicherung einer temporären Form.

Aus der Dissertation von Annette M. Schmidt ("Bioabbaubare Polymernetzwerk-Systeme mit Formgedächtniseffekt und kristallisierbarem Schaltsegment", 2002, Aachen, 1-134) ist ein Formgedächtnispolymer mit einem Polyester- oder Co-Polyestersegment als Schaltsegment (nämlich Oligo(ε-hydroxycaproat)-co-glycolat) PCG bzw. Oligo(ε-hydroxycaproat) PCL) und einem Polyacrylatsegment (nämlich Oligobutylacrylat PBA) als Weichsegment bekannt, das eine AB-Polymernetzwerkarchitektur aufweist, in dem eines der Segmente durch das andere, beidseitig endständig gebundene Segment vernetzt vorliegt. Es werden verschiedene Übergangstemperaturen dieser Segmente oder von Mischphasen von diesen offenbart, nämlich T_{g1} = -64 °C (amorphe PCL-reiche Phase), T_{g2} = -49 °C (amorphe PBAreiche Phase) und Tₘ = 50°C (kristalline PCL-Phase). Jedoch sind diese nicht geeignet, gleichzeitig jeweils eine temporäre Form zu fixieren. Vielmehr weisen die offenbarten Polymernetzwerke lediglich Zweiformen-Eigenschaften auf.

Nachteilig an den bekannten Formgedächtnispolymeren ist für einige Anwendungen, dass ihre Schalttemperaturen relativ dicht beieinander liegen, was eine genaue Einstellung der Temperatur beim Erwärmen zwischen beide Übergangstemperaturen erfordert. Ferner können die verhältnismäßig niedrigen Übergangstemperaturen für bestimmte Anwendungen problematisch sein, wenn nämlich anwendungsbedingt hohe Temperaturen auftreten, ohne dass eine Wiederherstellung der permanenten Form erwünscht ist.

Der Erfindung liegt daher die Aufgabe zugrunde, ein neues biokompatibles Formgedächtnispolymer bereitzustellen, das zumindest zwei temporäre Formen speichern kann. Die entsprechenden Schalttemperaturen des Polymers sollen insbesondere einen großen Abstand zueinander haben und wenigstens eine der Übergangstemperaturen sollte auf einem relativ hohen Temperaturniveau liegen. Des Weiteren soll ein Verfahren zur Programmierung von zumindest zwei temporären Formen des Formgedächtnispolymers zur Verfügung gestellt werden.

Diese Aufgabe wird gelöst durch ein Formgedächtnispolymer mit den Merkmalen des Anspruchs 1. Das erfindungsgemäße Formgedächtnispolymer weist mindestens zwei Schaltsegmente mit unterschiedlichen Übergangstemperaturen auf, so dass das Polymermaterial in Abhängigkeit von der Temperatur neben einer permanenten Form mindestens zwei temporäre Formen einnehmen kann. Das Formgedächtnispolymer ist ein AB-Polymernetzwerk, in dem eines der Schaltsegmente durch das andere, beidseitig endständig gebundene Schaltsegment vernetzt vorliegt. Das erfindungsgemäße Polymersystem umfasst ein erstes Schaltsegment, das im Wesentlichen auf einem Polyester der allgemeinen Formel I mit n = 1...6 oder einem Derivat von diesem basiert oder auf einem Co-Polyester der allgemeinen Formel I mit n = 1...6, worin mindestens zwei Estereinheiten mit unterschiedlichen Kettenlängen n vorhanden sind, oder einem Derivat von diesem.

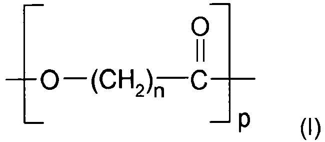

Das Polymersystem umfasst ferner ein zweites Schaltsegment, das im Wesentlichen auf einem Polyacrylat der allgemeinen Formel II basiert. Im Einzelnen handelt es sich um ein Poly(cyclohexylmethacrylat)-Segment mit R = CH₃ und R₁ = C₆H₁₁ (Cyclohexyl) oder ein Poly(cyclohexylacrylat)-Segment mit R = H und R₁ = C₆H₁₁. Besonders bevorzugt von diesen ist Poly(cyclohexylmethacrylat). Weitere erfindungsgemäße Schaltsegmente sind Poly(methylmethacrylat) (PMMA) und Poly(2-hydroxyethylmethacrylat) (PHEMA).

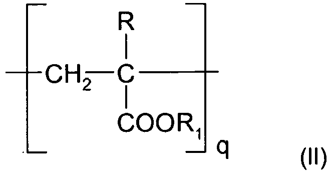

Dabei wird unter dem Begriff Schaltsegment ein Oligomer oder Polymer nach den angegebenen Formeln I bzw. II verstanden, das eine Kettenlänge p bzw. q aufweist, welche die Ausbildung einer eigenen Phase durch Phasenentmischung im Festkörper und damit die Grundlage zur Ausbildung der typischen Materialeigenschaften der entsprechenden Verbindung gestattet. Auf diese Weise wird erreicht, dass das Polymersystem als Ganzes Materialeigenschaften aufweist, die den jeweiligen Schaltsegmenten zugeordnet werden können, insbesondere zwei oder mehrere unterschiedliche Schalttemperaturen für den thermisch induzierten Effekt, bei denen es sich unabhängig voneinander um Glasübergangs- oder Schmelztemperaturen handeln kann. In struktureller Hinsicht können die Schaltsegmente kovalent oder nicht kovalent vernetzt vorliegen und endständig, einseitig oder beidseitig miteinander und/oder mit einem Polymerrückgrat verknüpft sein. Des Weiteren umfassen im Rahmen der vorliegenden Erfindung Derivate des Polyesters nach Formel I Strukturen, in denen einer oder mehrere der Wasserstoffreste der Methyleneinheiten (-CH₂-) durch unverzweigte oder verzweigte, gesättigte oder ungesättigte C1- bis C6-Reste ausgetauscht sind. Entscheidend bei der Auswahl der Substituenten im angegebenen Rahmen ist, dass die Ausbildung einer eigenen Phase der Schaltsegmente nicht verhindert wird.

Durch die erfindungsgemäße Zusammensetzung wird ein Material zur Verfügung gestellt, das nach entsprechender Programmierung in der Lage ist, zumindest zwei Deformationen gleichzeitig zu fixieren, die nach Aktivierung durch entsprechende thermische Stimuli wieder hergestellt werden können. Als eine besonders vorteilhafte Eigenschaft des erfindungsgemäßen Polymersystems haben sich Schalttemperaturen herausgestellt, die einen großen Temperaturabstand voneinander aufweisen. Insbesondere unterscheiden sich die beiden Schalttemperaturen der Schaltsegmente nach Formel I und II um zumindest 40°K, insbesondere von zumindest 50°K und vorzugsweise von zumindest 60°K voneinander. Ein weiterer Vorteil des erfindungsgemäßen Materials stellt die hohe Schalttemperatur des Poly-(meth)acrylatsegments dar, die insbesondere abhängig von dem Rest R₁ und der mittleren Kettenlänge q bei zumindest 110°C, insbesondere zumindest 120°C liegt. Ein weiterer Vorteil besteht darin, dass beide Polymersegmente physiologisch resorbierbar und ihre Abbauprodukte physiologisch kompatibel sind.

In bevorzugter Ausgestaltung der Erfindung umfasst das erste Schaltsegment ein Poly(ε-caprolacton)-Segment mit n = 5 oder ein Derivat von diesem, in dem die aliphatischen Kohlenstoffatome unabhängig voneinander mit einem oder zwei, unverzweigten oder verzweigten, gesättigten oder ungesättigten C1- bis C6-Resten substituiert sein können. Besonders bevorzugt ist jedoch nicht derivatisiertes Poly(ε-caprolacton) mit n = 5 nach Formel I, des heißt ohne Substituenten.

Die Molekulargewichte der Segmente sowie ihre Massenanteile im Polymer und ihre relativen Massenverhältnisse (erstes Schaltsegment: zweites Schaltsegment) sind so abgestimmt, dass die oben beschriebenen Kriterien für die Schalttemperaturen eingehalten werden und deutliche Formveränderungen bei den zumindest zwei Schaltübergängen erzielt werden. Mit Vorteil weist das erste Schaltsegment (Polyester) ein mittleres Molekulargewicht im Bereich von 2.000 bis 100.000 g/mol, insbesondere von 5.000 bis 40.000 g/mol, vorzugsweise von etwa 10.000 g/mol auf. Vorzugsweise liegt ein Massenanteil des Polyestersegments im Formgedächtnispolymer im Bereich von 25 bis 75 %, insbesondere im Bereich von 30 bis 70 %, vorzugsweise im Bereich von 50 bis 60 %. Entsprechend weist das Polyacrylatsegment einen Massenanteil im Bereich von 75 bis 25 %, insbesondere im Bereich von 70 bis 30 %, bevorzugt 50 bis 40 % auf.

Bei dem erfindungsgemäßen Polymersystem handelt es sich um ein AB-Polymernetzwerk, in dem eines der Schaltsegmente durch das andere, beidseitig endständig gebundene Schaltsegment vernetzt vorliegt. Insbesondere besteht das Formgedächtnispolymer aus Polyacrylatsegmenten, die durch die Polyesterketten vernetzt sind. Letztere sind dabei mit ihren beiden Enden an die Polyacrylatsegmente kovalent gebunden. Allerdings ist auch die inverse Konstellation denkbar, in der Polyacrylatsegmente beidseitig die Polyestersegmente vernetzen.

Das erfindungsgemäße Formgedächtnispolymer kann vorteilhaft durch ein Verfahren hergestellt werden, indem
- ein Polyester-Makromonomer der allgemeinen Formel I a, worin n = 1...6 und Y ein beliebiger verbindender Rest ist, oder einem Co-Polyester der allgemeinen Formel I a (worin n und Y die obige Bedeutung haben) mit mindestens zwei Estereinheiten mit unterschiedlichen n oder einem Derivat von diesen und 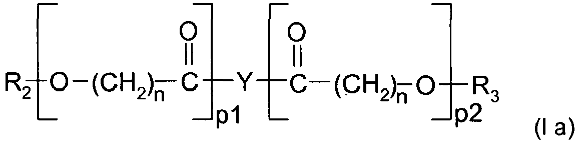
- ein Acrylatmonomer der allgemeinen Formel IIa, worin R und R₁ die vorstehend im Zusammenhang mit Formal (II) genannten Definitionen besitzen, 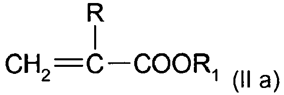
miteinander copolymerisiert werden. Bevorzugte Ausgestaltungen des Polyesters und des Acrylatmonomers werden entsprechend der vorstehenden Beschreibung gewählt. Dabei können in Formel I a p1 und p2, das heißt die Kettenlängen der Polyester bzw. Co-Polyester, gleich oder ungleich sein. Der Rest Y dient ausschließlich der Verbindung der beiden Polyestereinheiten unter Umkehrung der Kettenrichtung, so dass beidseitig polymerisationsfähige Endgruppen angefügt werden können, die der Vernetzung dienen (s.u.).

Ein geeignetes Makromonomer der Polyesterkomponente entspricht beispielsweise der allgemeinen Formel I b mit r = 2...8 und X = O oder NH. Besonders bevorzugt ist eine Komponente mit r = 2, p3 = 2 und X=O, das heißt, das Polyester-Makromonomer wird durch Polymerisation von Diethylenglycol HO-CH₂-CH₂-O-CH₂-CH₂-OH mit den entsprechenden Estermonomeren erhalten.

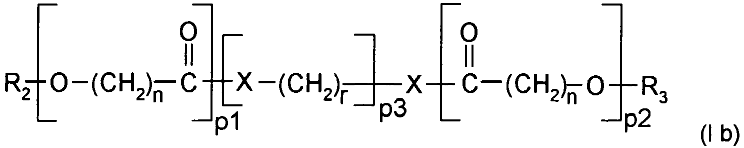

In der o.g. Formel (I a) sind die erste Endgruppe R₂ und/oder die zweite Endgruppe R₃ des ersten Schaltsegments unabhängig voneinander ein polymerisierbarer Rest. Vorzugsweise sind sowohl R₂ als auch R₃ jeweils ein polymerisierbarer Rest. Besonders bevorzugt werden für R₂ und/oder R₃ Acryl- oder Methacrylreste eingesetzt, insbesondere jeweils ein Methacrylrest. Auf diese Weise erhält man bei der Copolymerisation beider Komponenten ein Netzwerk, in dem die Polyestersegmente beidseitig verknüpft sind.

Nach einer besonders bevorzugten Ausführung wird als Acrylatkomponente Cyclohexylmethacylat nach Formel II b eingesetzt, die bei ihrer (Homo)Polymerisation zu Poly(cyclohexylmethacrylat)-Segmenten nach Formel II c führt.

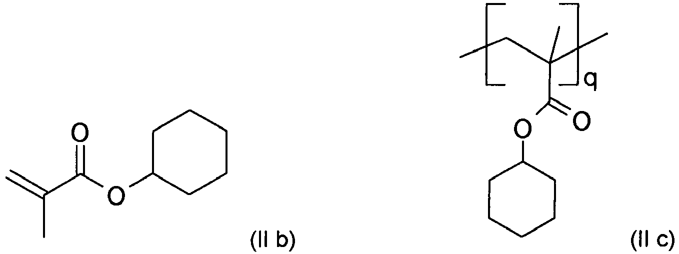

In einer besonders bevorzugten Ausgestaltung wird somit das Makromonomer Poly(ε-caprolacton)-dimethacrylat (PCLDMA) nach Formel Ic mit dem Monomer Cyclohexylmethacylat (CHMA) nach Formel II b copolymerisiert. Hierdurch entsteht ein vernetztes AB-Blockcopolymer, das Segmente nach Formel I c und Segmente nach Formel II c enthält.

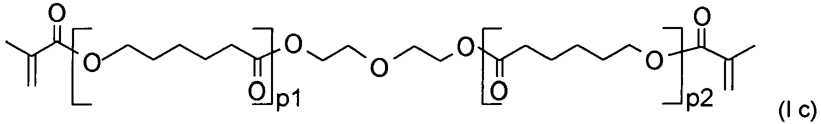

Ein weiterer wichtiger Aspekt der Erfindung betrifft ein Verfahren zur Programmierung von mindestens zwei temporären Formen bei einem Formgedächtnispolymer gemäß der Erfindung. Das erfindungsgemäße Verfahren umfasst die Schritte
(a) Überführung des Formgedächtnispolymers in eine der ersten temporären Form entsprechende Form bei einer Temperatur oberhalb der oberen Übergangstemperatur,
(b) Abkühlung auf eine Temperatur unterhalb der oberen Übergangstemperatur unter Fixierung der ersten temporären Form,
(c) Überführung des Formgedächtnispolymers in eine der zweiten temporären Form entsprechende Form bei einer Temperatur oberhalb der unteren Übergangstemperatur und unterhalb der oberen Übergangstemperatur und
(d) Abkühlung auf eine Temperatur unterhalb der unteren Übergangstemperatur unter Fixierung der zweiten temporären Form.

Dabei kann die in Schritt (b) erfolgende Abkühlung wahlweise auf eine Zwischentemperatur unterhalb der oberen Übergangstemperatur und oberhalb der unteren Übergangstemperatur abgekühlt werden oder aber auf eine Temperatur unterhalb der unteren Übergangstemperatur. Entscheidend für die Fixierung der ersten temporären Form ist, dass unterhalb der oberen Übergangstemperatur abgekühlt wird. Handelt es sich bei dem Formgedächtnispolymer um eines, das mehr als zwei temporäre Formen speichern kann, das heißt zumindest drei Schaltsegmente aufweist, werden die weiteren temporären Formen in analoger Weise programmiert, indem jeweils oberhalb der entsprechenden Übergangstemperatur eine Deformationskraft ausgeübt wird und die temporäre Form durch Kühlung unterhalb dieser Übergangstemperatur unter Beibehaltung der Deformationskraft fixiert wird.

Das erfindungsgemäße Formgedächtnispolymer eignet sich besonders vorteilhaft für Anwendungen in der Konstruktionstechnik, beispielsweise als Befestigungselemente, die nach Ausüben eines entsprechenden Temperaturstimulus in eine Verankerungsform überführt werden können. Insbesondere ist das erfindungsgemäße Polymer in Bereichen vorteilhaft, in denen prozessbedingt relativ hohe Temperaturen auftreten, ohne dass die Wiederherstellung der permanenten Form des Polymers erwünscht ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: Struktur eines erfindungsgemäßen AB-Polymernetzwerkes, erhalten durch Copolymerisation von PCLDMA-Makromonomer und CHMA-Monomer,
- Figur 2: DMTA-Untersuchungen der Phasenübergänge von PCL-PCHMA-Netzwerken,
- Figur 3: strukturelle Veränderungen eines AB-Polymernetzwerkes während seiner Programmierung gemäß Figur 1,
- Figur 4: zeitliche Verläufe verschiedener Programmierungsparameter in einem zyklischen, thermomechanischen Experiment und
- Figur 5: Formgedächtnispolymer gemäß der Erfindung in einem Anwendungsbeispiel.

### 1. Synthese von Poly(ε-caprolacton)dimethacrylat PCL10kDMA

500 g (50 mmol) Poly(ε-caprolacton)diol (Aldrich) mit einem mittleren Molekulargewicht von 10 000 g/mol (PCL10k-diol) wurden in 5 I Dichlormethan in einem trockenen 3-Halskolben unter Stickstoffatmosphäre vorgelegt. Unter Eiskühlung wurden 20,0 ml (0,14 mol) Triethylamin tropfenweise zugegeben. Nach 10 min Rühren bei 0°C wurden 17,4 ml (0,18 mol) Methacryloylchlorid tropfenweise zugegeben. Die Lösung wurde auf RT erwärmt und für weitere 24 h gerührt. Das ausgefallene Salz wurde durch Filtration entfernt. Das Filtrat wurde aufkonzentriert und in Ethylacetat gelöst. Diese Lösung wurde in einem 10fachen Überschuss einer Mischung aus Hexan/Diethylether/Methanol (18:1:1 Volumenanteile) bei - 20°C ausgefällt. Nach Vakuumtrocknung wurden 475 g (47 mmol) Poly(ε-caprolacton)dimethacrylat PCLDMA mit einem mittleren Molekulargewicht von 10 kD (PCL10kDMA) nach der Formel I c (s.o.) erhalten (Ausbeute 95 %). Der Funktionalisierungsgrad der PCL-diole mit Methacrylatendgruppen wurde mit ¹H-NMR-Spektroskopie auf ca. 85 % bestimmt. Dies bedeutet, dass 72 % der Makromonomere beidseitig funktionalisiert wurden (Dimethacrylat), 26 % einseitig funktionalisiert wurden (Monomethacrylat) und 2 % nicht funktionalisiert als Diol vorlagen.

### 2. Copolymerisation von PCLDMA und CHMA

PCL10kDMA hergestellt nach Beispiel 1 und Cyclohexylmethacrylat (CHMA) (Reinheit ≥ 97 %, Aldrich) gemäß Formel II b (s.o.) wurden in verschiedenen Mischungsverhältnissen im Bereich von 10 bis 80 Gew.-% PCL10kDMA gemäß Tabelle 1 eingewogen. Diese Mischungen aus PCL10kDMA und CHMA wurden bei 70°C in Kolben in einem Ölbad geschmolzen. Nach Vorliegen einer blasenfreien homogenen Schmelze wurden die Mischungen auf eine Glasplatte (10 x 10 cm) ausgegossen und die Form durch eine aufgelegte weitere Glasplatte unter seitlicher Anordnung von PTFE-Abstandhaltern (Dicke 0,55 cm) geschlossen. Das durch Klammern fixierte Gebilde wurde für 60 min UV-bestrahlt (Fe-dotierte Quecksilberdampflampe), um die Polymerisation/Vernetzung auszulösen. Als Vergleichsmaterial wurde reines PCL10kDMA entsprechend behandelt, um ein Homopolymernetzwerk aus PCL10kDMA zu erhalten (PCL(100) in Tabelle 1).

**Tabelle 1**

| Polymer^{#} | PCL10kDMA [g] | CHMA [g] |
|---|---|---|
| PCL(10)CHMA | 0,77 | 6,80 |
| PCL(20)CHMA | 1,40 | 5,60 |
| PCL(25)CHMA | 1,75 | 5,25 |
| PCL(30)CHMA | 2,10 | 4,90 |
| PCL(35)CHMA | 2,45 | 4,56 |
| PCL(40)CHMA | 2,80 | 4,20 |
| PCL(45)CHMA | 3,06 | 3,70 |
| PCL(50)CHMA | 3,36 | 3,34 |
| PCL(60)CHMA | 4,20 | 2,81 |
| PCL(80)CHMA | 5,60 | 1,40 |
| PCL(100) | 8,50 | - |

| | | |
|---|---|---|
| ^{#} Die in den Klammern angegebenen Zahlen bezeichnen den Massenanteil-an PCL10kDMA im Polymernetzwerk. | | |

Obwohl die eingesetzten Mengen von PCL10KDMA und CHMA nicht quantitativ in das Netzwerk inkorporiert wurden, konnte durch ¹H-HRMAS-NMR-spektroskopische Untersuchungen ermittelt werden, dass das eingesetzte Verhältnis der beiden Komponenten im Polymernetzwerk annähernd erhalten bleibt. Zuvor wurden nicht inkorporierte Bestandteile durch Extraktion mit Chloroform entfernt.

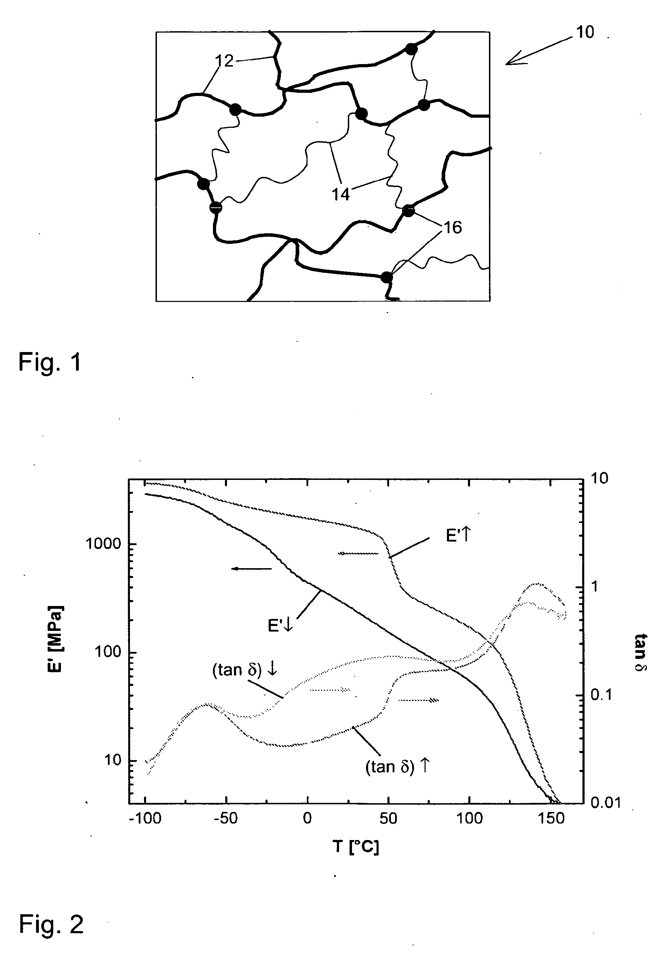

Figur 1 zeigt schematisch die Struktur eines so erhaltenen insgesamt mit 10 bezeichneten PCL-PCHMA-Polymernetzwerkes. Hierin sind mit 12 die Poly(cyclohexylmethacrylat)-Segmente ((PCHMA-Segmente) und die PCL10kDMA-Ketten mit 14 bezeichnet. Die PCHMA-Segmente 12 sind durch die beidseitig gebundenen PCL10kDMA-Ketten 14 kovalent vernetzt. Die Verknüpfungspunkte zwischen den Enden der PCHMA-Segmente 12 und den PCL10kDMA-Segmenten 14 sind mit 16 bezeichnet.

### 3. Charakterisierung der Polymernetzwerke aus PCLDMA und PCHMA

Die thermischen Eigenschaften der laut Beispiel 2 hergestellten Polymernetzwerke aus PCL10kDMA-Makromonomeren und CHMA-Monomeren unterschiedlicher Zusammensetzung wurden nach Extraktion mit Chloroform mit Dynamischer Differenz-Kalorimetrie (DSC) und mit dynamisch-mechanischer Thermoanalyse (DMTA) untersucht. DSC-Messungen wurden auf einem Netzsch DSC 204 Phoenix-Gerät durchgeführt. Dafür wurden 5 bis 10 mg der Proben in einem Aluminium-Gefäß eingewogen und die Messungen unter Stickstoffatmosphäre in einem Temperaturbereich von -100 bis +150°C durchgeführt, wobei zur Erfassung von Glasübergängen eine Abkühl- und Heizrate von 10 K·min⁻¹ eingesetzt wurde und von 1 K·min⁻¹ zur Erfassung von Schmelz- bzw. Kristallisationsübergängen. Die Ergebnisse sind in Tabelle 2 zusammengefasst. DMTA-Messungen wurden auf einem Eplexor 5 N (Gabo) ausgeführt, welches mit einem 25 N-Kraftaufnehmer ausgestattet war. Die statische Last betrug 0,50%, die dynamische Last 0,20%, die Frequenz 10 Hz und die Heizrate 2 K·min⁻¹ in einem Temperaturbereich von -100 bis +170°C. Die Ergebnisse sind ebenfalls in Tabelle 2 zusammengefasst.

**Tabelle 2**

| | DSC | | DMTA | | |
|---|---|---|---|---|---|
| Polymer^{#} | T_{g} (PCL) [°C] | Tₘ (PCL) [°C] | T_{g} (PCL) [°C] | Tₘ (PCL) [°C] | T_{g} (PCHMA) [°C] |
| PCL(10)CHMA | n.b. | 47,9 ± 0,5 | n.b. | n.b. | n.b. |
| PCL(20)CHMA | n.b. | 50,6 ± 0,5 | n.b. | n.b. | n.b. |
| PCL(25)CHMA | -67,5 ± 1,0 | 47,7 ± 0,5 | n.b. | n.b. | n.b. |
| PCL(30)CHMA | -67,1 ± 1,0 | 47,7 ± 0,5 | -66 ± 1 | 51 ± 1 | 142 ± 1 |
| PCL(35)CHMA | -65,6 ± 1,0 | 48,0 ± 0,5 | -66 ± 1 | 51 ± 1 | 140 ± 1 |
| PCL(40)CHMA | -64,4 ± 1,0 | 50,1 ± 0,5 | -65 ± 1 | 50 ± 1 | 141 ± 1 |
| PCL(45)CHMA | -64,3 ± 1,0 | 50,6 ± 0,5 | -66 ± 1 | 49 ± 1 | 141 ± 1 |
| PCL(50)CHMA | -64,5 ± 1,0 | 51,2 ± 0,5 | -66 ± 1 | 50 ± 1 | n.b. |
| PCL(60)CHMA | -63,7 ± 1,0 | 50,6 ± 0,5 | -65 ± 1 | 46 ± 1 | n.b. |
| PCL(80)CHMA | -61,7 ± 1,0 | 52,1 ± 0,5 | -52 ± 1 | 43 ± 1 | n.b. |
| PCL(100) | -60,8 ± 1,0 | 54,2 ± 0,5 | -53 ± 1 | 46 ± 1 | n.b. |

| | | | | | |
|---|---|---|---|---|---|
| ^{#} Die in den Klammern angegebenen Zahlen bezeichnen den Massenanteil an PCL10kDMA im Polymernetzwerk. n.b.: nicht bestimmbar | | | | | |

Ebenso wie für das PCHMA-Homopolymer (Ergebnisse nicht dargestellt) konnten für die Polymernetzwerke mit den relativ unempfindlichen DSC-Messungen kein Glasübergang der PCHMA-Segmente beobachtet werden. Diese wurden durch die DMTA-Untersuchungen nachgewiesen. Figur 2 zeigt für das Polymernetzwerk PCL(35)CHMA den mit DMTA im Aufheizzyklus (T) sowie im Abkühlzyklus (↓) gemessenen Verlauf des Speichermoduls E' sowie des mechanischen Verlustfaktors tan δ. Hieraus wurde die Glasübergangstemperatur von PCL (T_{g}(PCL)) aus dem Maximum des Verlustmoduls E", die Schmelzübergangstemperatur von PCL (Tₘ(PCL)) aus dem Wendepunkt von E' und die Glasübergangstemperatur von PCHMA (T_{g}(PCHMA)) aus dem Maximum von tan δ bestimmt. Ab einem PCL-Massenanteil von 50 % konnte der Glasübergang von PCHMA aufgrund des geringen Signal-Rausch-Verhältnisses nicht mehr bestimmt werden.

Es ist ersichtlich, dass das erfindungsgemäße, PCL- und PCHMA-Segmente enthaltende AB-Polymernetzwerk im Bereich zwischen 0 und 150°C zwei gut differenzierte Phasenübergänge aufweist, die sich auf das Schmelzen von PCL-Kristalliten einerseits und den Glasübergang von PCHMA-Domänen zurückführen lassen. Dabei ist die untere Übergangstemperatur T_{trans,1} eindeutig mit dem Schmelzen bzw. der Kristallisation von PCL-Segmenten assoziiert, das bei dem Homopolymer PCL(100) bei 54°C beobachtet wird und in den Copolymernetzwerken mit einem PCL-Massenanteil zwischen 10 und 80% bei 48 bei 52°C liegt (Tₘ (PCL)). Die mit DMTA detektierte obere Übergangstemperatur T_{trans,2} bei 140 bis 142°C kann hingegen eindeutig dem Glasübergang von PCHMA-Segmenten zugeordnet werden (T_{g}(PCHMA)). Diese Ergebnisse zeigen, dass das erfindungsgemäße AB-Polymernetzwerk eine phasenseparierte Morphologie aufweist, in welcher die PCL- und PCHMA-Segmente eigene Phasen mit eigenen Übergangstemperaturen ausbilden, die zur temperaturgesteuerten Fixierung zweier temporären Formen geeignet sind. Da die mit DMTA ermittelten Werte für T_{g} von PCL und PCHMA im Polymernetzwerk sich nicht wesentlich von den entsprechenden Homopolymeren unterscheiden, kann die Existenz von amorphen Mischphasen ausgeschlossen werden.

### 4. Programmierung eines Polymernetzwerkes aus PCLDMA und PCHMA

Ein AB-Polymernetzwerk PCL(45)CHMA hergestellt nach Beispiel 2 basierend auf 45 Gew.-% PCL10kDMA und 55 Gew.-% PCHMA wurde in einem zyklischen thermomechanischen Experiment derart programmiert, dass neben der herstellungsbedingten permanenten Form zwei temporäre Formen in dem "Formgedächtnis" des Polymers gespeichert wurden. Dies erfolgt prinzipiell durch Fixierung einer ersten temporären Form bei einer Temperatur unterhalb der Glasübergangstemperatur von PCHMA (T_{g}(PCHMA)) oder einer Termperatur unterhalb der Schmelztemperatur von PCL (Tₘ(PCL)) und anschließendem Fixieren einer zweiten temporären Form bei einer Temperatur unterhalb der Schmelztemperatur von PCL (Tₘ(PCL)).

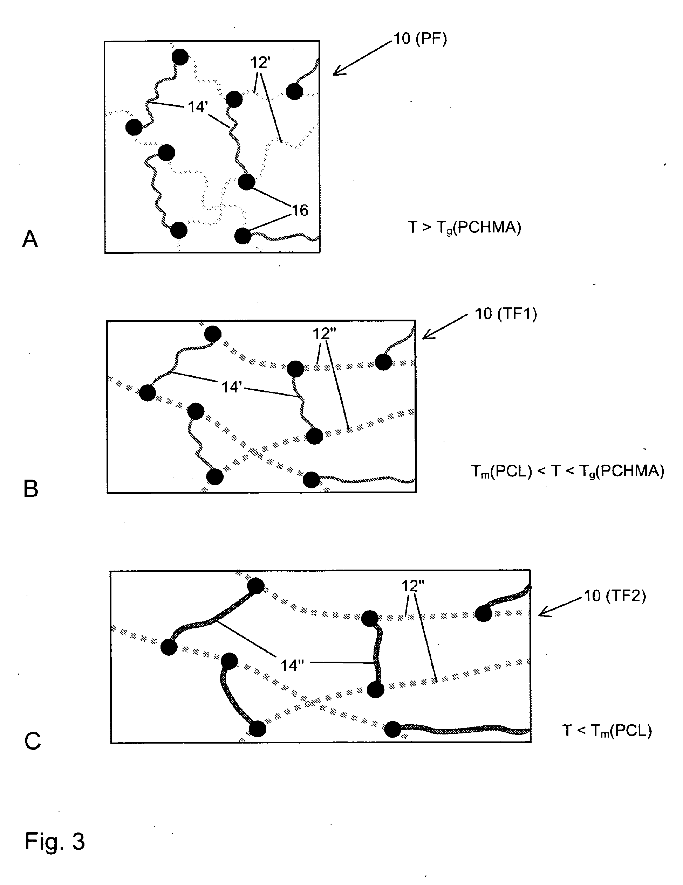

Dieses Prinzip ist anhand von Figur 3 erläutert, wobei analoge Bezugszeichen wie in Figur 1 verwendet werden. Dabei zeigt Figur 3A die Struktur des Polymernetzwerkes 10 oberhalb der oberen Übergangstemperatur, das heißt oberhalb der Glasübergangstemperatur T_{g}(PCHMA) der PCHMA-Segmente. Bei dieser Temperatur liegen die PCL-Segmente 14 im amorphen Zustand vor, was durch das Bezugszeichen 14' gekennzeichnet ist. Die PCHMA-Segmente 12 liegen im amorphen, elastischen Zustand vor, was durch 12' gekennzeichnet ist. Das Polymer 10 weist in dieser Startphase des Programmierverfahrens zunächst noch seine permanente Form PF auf, die durch den Herstellungsprozess bedingt ist, insbesondere durch eine während der Vernetzung vorgegebene äußere Form.

Ausgehend von der in Figur 3A gezeigten Form wird in einem ersten Schritt das Polymernetzwerk 10 in eine Form gebracht, welche einer ersten temporären Form TF1 entspricht. Dies erfolgt durch Ausübung einer geeigneten mechanischen Belastung oberhalb von T_{g}(PCHMA), die beispielweise zu einer Elongation des Polymers 10 führt. Dies ist in Figur 3B durch eine horizontale Dehnung des dargestellten Polymerausschnitts angedeutet. Nach der Elongation wird das Polymersystem 10 auf eine Temperatur abgekühlt, die in jedem Fall unterhalb der Glasübergangstemperatur T_{g}(PCHMA) liegt, insbesondere zwischen Tₘ(PCL) und T_{g}(PCHMA). Die Abkühlung führt zu einem Glasübergang der PCHMA-Segmente 12, die von ihrem amorphen, elastischen Zustand 12' in einen amorphen, glasigen Zustand 12" übergehen. Die erste temporäre Form TF1 kann optional durch Tempern bei der T < T_{g}(PCHMA) für eine vorbestimmte Dauer stabilisiert werden. Die mechanische Belastung wird währenddessen aufrechterhalten.

Im nächsten Schritt erfolgt die Programmierung der zweiten temporären Form TF2 analog zur ersten temporären Form TF1. Insbesondere wird durch einen zweiten mechanischen Stimulus das Polymer 10 in die zweite temporäre Form TF2 überführt, was beispielsweise durch eine weitere Dehnung bei einer Temperatur oberhalb von Tₘ(PCL) erfolgen kann (in Figur 3C wiederum durch eine horizontale Dehnung des Polymerausschnitts angedeutet). Anschließend wird auf eine Temperatur unterhalb der unteren Übergangstemperatur, das heißt der Schmelztemperatur Tₘ(PCL) der PCL-Segmente 14 abgekühlt, um auch die zweite temporäre Form TF2 zu fixieren. Dabei kommt es zur Ausbildung von semikristallinen PCL-Segmenten 14". Unter Aufrechterhaltung der mechanischen Belastung kann auch in dieser Stufe das Polymernetzwerk 10 noch für eine gewisse Zeit getempert werden, wodurch auch die Bildung von PCL-Kristalliten gefördert wird.

Ausgehend von einem auf diese Weise programmierten Polymernetzwerk 10, das in seiner zweiten temporären Form TF2 vorliegt, können die erste temporäre Form TP1 und die permanente Form PF nacheinander abgerufen werden, wenn das Polymer 10 erst auf eine Zwischentemperatur Tₘ(PCL) < T < T_{g}(PCHMA) und anschließend auf eine Temperatur oberhalb von T_{g}(PCHMA) erwärmt wird. Das Wiederherstellen zuvor fixierter Formen wird als Formgedächtnis- oder Shape-Memory-Effekt (SM-Effekt) bezeichnet.

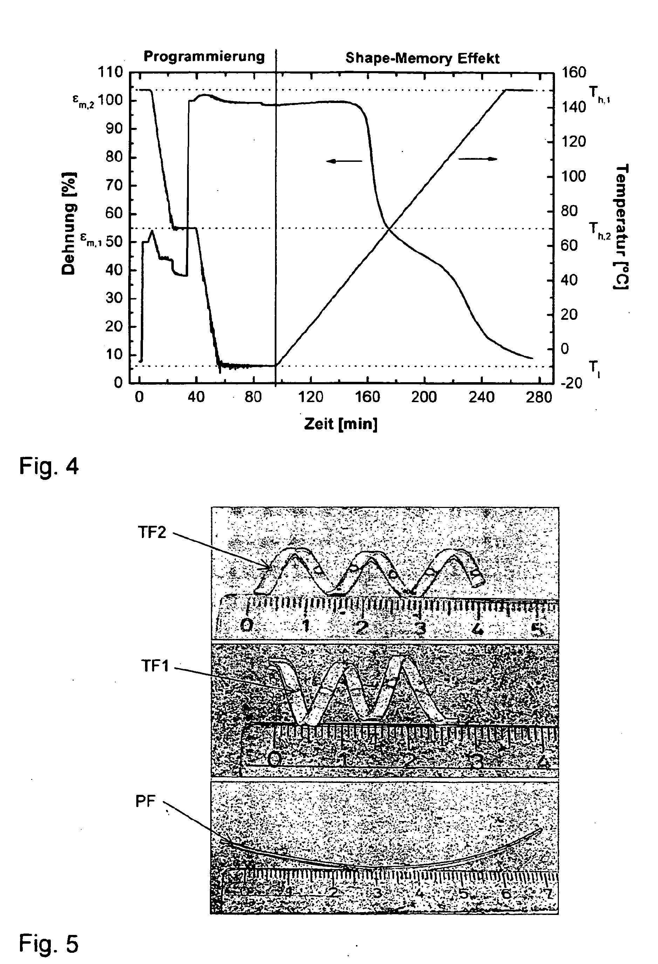

Figur 4 stellt die Verläufe der Temperatur sowie der Dehnung während eines Programmierungszyklus und Wiederherstellungszyklus des Polymers PCL(35)CHMA dar.

Der Programmierungszyklus startet bei einer Temperatur T_{h,1} von 150°C oberhalb T_{g}(PCHMA). Es erfolgt eine Dehnung des Polymers auf 50% (ε_{m,1}) entsprechend der ersten temporären Form TF1. Anschließend wird unter Aufrechterhaltung der mechanischen Last mit einem Temperaturgradienten von 5 K·min⁻¹ auf eine Zwischentemperatur von 70°C (T_{h,2}) unterhalb T_{g}(PCHMA) und oberhalb Tₘ(PCL) abgekühlt, wobei sich die Probe aufgrund ihrer Entropieelastizität zunächst etwas ausdehnt und dann aufgrund ihrer Energieelastizität. kontrahiert. Nach einer Haltezeit von 30 min bei 70°C wird das Polymer entlastet, wobei ein leichter Rückgang der Dehnung beobachtet wird. Anschließend wird die Probe noch für 10 min ohne mechanische Last bei T_{h,2} gehalten, um sie dann auf 100 % Gesamtausdehnung entsprechend der zweiten temporären Form TF2 zu dehnen (ε_{m,2}). Dann wird unter konstanter mechanischer Last auf -10°C (T₁) abgekühlt und für weitere 20 min die mechanische Last aufrechterhalten, um die Kristallisation der PCL-Domänen zu erlauben. Die nachfolgende Entspannung der Probe und das Halten der Temperatur bei -10°C für weitere 10 min führt zu einer leichten Abnahme der Dehnung.

Nach Beendigung des Programmierungszyklus erfolgt nacheinander der Abruf der gespeicherten Formen, indem (ohne mechanische Last) mit einer Aufheizrate von 1 K·min⁻¹ die Probe von -10 auf +150°C wieder erwärmt wird. Dabei wird zunächst das Aufschmelzen der PCL-Kristallite und die Wiederherstellung der ersten temporären Form um Tₘ(PCL) beobachtet. Wird die Temperatur für 48 h bei 70°C gehalten, bleibt die erste temporäre Form stabil und es erfolgt kein Übergang in die permanente Form (nicht dargestellt). Die weitere Aufheizung oberhalb T_{g}(PCHMA) führt zum Erweichen der glasigen PCHMA-Domänen und zur nahezu quantitativen Wiederherstellung der permanenten Form. Dieser Programmierungs- und Wiederherstellungszyklus wurde weitere vier Mal mit dem gleichen Ergebnis durchgeführt.

Der in Figur 4 dargestellte Programmier- und Wiederherstellungszyklus wurde mit sämtlichen AB-Copolymernetzwerken aus Beispiel 2 durchgeführt. Aus den 2. bis 5. Zyklen wurden die Schalttemperaturen für die PCL- und PCHMA-Segmente ermittelt und gemittelt. Für die Polymernetzwerke PCL(30)CHMA bis PCL(60)CHMA wurde eine Schalttemperatur der PCL-Segmente von 53 bis 65°C ermittelt und eine Schalttemperatur der PCHMA-Segmente von 120 bis 125°C.

Ein Demonstrationsbeispiel für eine praktische Anwendung eines programmierten erfindungsgemäßen Polymernetzwerkes PCL(40)CHMA entsprechend Beispiel 2 ist in Figur 5 dargestellt. Dabei ist im oberen Teil der Abbildung die zweite temporäre Form TF2 des Polymers bei Raumtemperatur gezeigt, welche einer Spiralform entspricht. Unter Erwärmung des Polymersystems auf eine Temperatur von 70°C erfolgt eine Kontraktion der Spirale von zunächst etwa 4 cm auf etwa 2,5 cm, wobei der Spiraldurchmesser zunimmt (Fig. 5, mittlerer Teil). Diese Form entspricht der ersten temporären Form TF1. Bei weiterer Erwärmung des Polymersystems auf 150°C kommt es zu einem vollständigen Aufbiegen des Polymers unter Verlust der Spiralform. Stattdessen nimmt das Polymersystem seine stäbchenförmige, permanente Form PF an (Fig. 5, unterer Teil).

### BEZUGSZEICHENLISTE

- PF: permanente Form
- TF1: erste temporäre Form
- TF2: zweite temporäre Form
- T_{trans,1}: erste Übergangstemperatur
- T_{trans,2}: zweite Übergangstemperatur
- Tₘ(PCL): Schmelztemperatur der PCL-Segmente
- T_{g}(PCHMA): Glasübergangstemperatur der PCHMA-Segmente

- 10: Polymernetzwerk
- 12: PCHMA-Segmente
- 12': amorph-elastische PCHMA-Segmente
- 12": amorph-glasige PCHMA-Segmente
- 14: PCL-Segmente
- 14': amorphe PCL-Ketten
- 14": semikristalline PCL-Ketten
- 16: Verknüpfungspunkte

## Patentansprüche

1. Formgedächtnispolymer, das mindestens zwei Schaltsegmente umfasst, wobei das Formgedächtnispolymer ein AB-Polymernetzwerk ist, in dem eines der Schaltsegmente durch das andere, beidseitig endständig gebundene Schaltsegment vernetzt vorliegt,
und wobei ein erstes Schaltsegment im Wesentlichen auf einem Polyester der allgemeinen Formel I mit n = 1...6 oder einem Co-Polyester der allgemeinen Formel I mit unterschiedlichen n oder einem Derivat von diesen basiert und ein zweites Schaltsegment im Wesentlichen auf einem Polyacrylat der allgemeinen Formel II basiert, worin R gleich H oder CH₃ ist und R₁ einen Cyclohexylrest bedeutet oder worin R und R₁ jeweils CH₃ bedeutet oder worin R gleich CH₃ ist und R₁ ein 2-Hydroxyethylrest bedeutet,
und wobei p und q derart gewählt sind, dass das erste und das zweite Schaltsegment im Formgedächtnispolymer durch Phasenentmischung im Festkörper eine eigene Phase mit jeweils zumindest einer Übergangstemperatur (T_{trans,1}, T_{trans,2}) ausbilden, die geeignet sind, gleichzeitig jeweils eine temporäre Form zu fixieren, so dass das Polymer nach seiner Programmierung in Abhängigkeit von der Temperatur neben einer permanenten Form (PF) mindestens zwei temporäre Formen (TF1, TF2) einnehmen kann

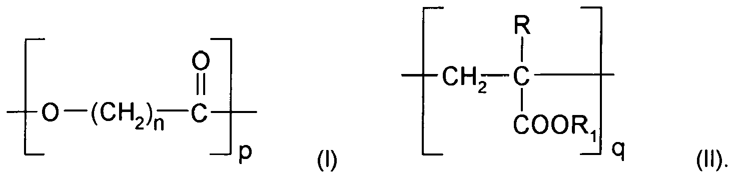

2. Formgedächtnispolymer nach Anspruch 1,
**dadurch gekennzeichnet, dass**
das erste Schaltsegment ein Poly(ε-caprolacton)-Segment mit n = 5 oder ein Derivat von diesem umfasst, in dem die aliphatischen Kohlenstoffatome unabhängig voneinander mit einem oder zwei, unverzweigten oder verzweigten, gesättigten oder ungesättigten C1- bis C6-Resten substituiert sein können.

3. Formgedächtnispolymer nach einem der vorhergehenden Ansprüche,
**dadurch gekennzeichnet, dass**
das erste Schaltsegment ein mittleres Molekulargewicht im Bereich von 2.000 bis 100.000 g/mol, insbesondere von 5.000 bis 40.000 g/mol, vorzugsweise von etwa 10.000 g/mol aufweist.

4. Formgedächtnispolymer nach einem der vorhergehenden Ansprüche,
**dadurch gekennzeichnet, dass**
ein Massenanteil des Polyestersegments im Formgedächtnispolymer im Bereich von 25 bis 75 %, insbesondere im Bereich von 30 bis 70 %, bevorzugt im Bereich von 50 bis 60 %, liegt.

5. Formgedächtnispolymer nach einem der vorhergehenden Ansprüche,
**dadurch gekennzeichnet, dass**
das Formgedächtnispolymer ein AB-Polymernetzwerk ist, in dem Polyacrylatsegmente durch beidseitig endständig gebundene Polyesterketten vernetzt vorliegen.

6. Verfahren zur Herstellung eines Formgedächtnispolymers nach einem der Ansprüche 1 bis 5, wobei ein Polyester-Makromonomer der allgemeinen Formel I a, worin n = 1...6 und Y ein verbindender Rest ist, oder ein Co-Polyester-Makromonomer der allgemeinen Formel I a mit unterschiedlichen n oder einem Derivat von diesen und ein Acrylatmonomer der allgemeinen Formel IIa, worin in Formel II a R gleich H oder CH₃ ist und R₁ einen Cyclohexylrest bedeutet oder worin R und R₁ jeweils CH₃ bedeutet oder worin R gleich CH₃ ist und R₁ ein 2-Hydroxyethylrest bedeutet und in Formel I a die erste Endgruppe R₂ und/oder die zweite Endgruppe R₃ unabhängig voneinander ein polymerisierbarer Rest bedeuten, copolymerisiert werden

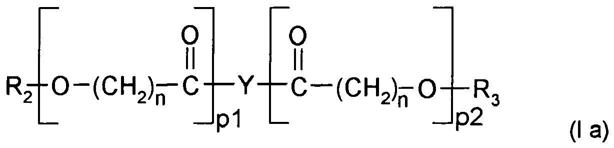

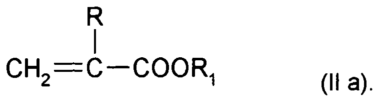

7. Verfahren nach Anspruch 6,
**dadurch gekennzeichnet, dass**
R₂ und R₃ der Polyesterkomponente jeweils ein polymerisierbarer Rest sind.

8. Verfahren nach Anspruch 7,
**dadurch gekennzeichnet, dass**
die erste Endgruppe R₂ und/oder die zweite Endgruppe R₃ der Polyesterkomponente ein Acryl- oder Methacrylrest sind, insbesondere jeweils ein Methacrylrest sind.

9. Verfahren zur Programmierung von mindestens zwei temporären Form (TF1, TF2) bei einem Formgedächtnispolymer nach einem der Ansprüche 1 bis 5, mit den Schritten
(a) Überführung des Formgedächtnispolymers in eine der ersten temporären Form (TF1) entsprechende Form bei einer Temperatur oberhalb der oberen Übergangstemperatur (T_{trans,1}),
(b) Abkühlung auf eine Temperatur unterhalb der oberen Übergangstemperatur (T_{trans,1}) unter Fixierung der ersten temporären Form (TF1),
(c) Überführung des Formgedächtnispolymers in eine der zweiten temporären Form (TF2) entsprechende Form bei einer Temperatur oberhalb der unteren Übergangstemperatur (T_{trans,2}) und unterhalb der oberen Übergangstemperatur (T_{trans,1}) und
(d) Abkühlung auf eine Temperatur unterhalb der unteren Übergangstemperatur (T_{trans,2}) unter Fixierung der zweiten temporären Form (TF2).

10. Verfahren nach Anspruch 9,
**dadurch gekennzeichnet, dass**
in Schritt (b) auf eine Temperatur unterhalb der oberen Übergangstemperatur (T_{trans,1}) und oberhalb der unteren Übergangstemperatur (T_{trans,2}) abgekühlt wird oder auf eine Temperatur unterhalb der unteren Übergangstemperatur (T_{trans,2}).

## Claims

1. Shape memory polymer comprising at least two switching segments, wherein the shape memory polymer is an AB polymer network in which one of the switching segments is crosslinked by the other switching segment, which is bound terminally at both ends,
and wherein a first switching segment is based essentially on a polyester of the general formula I where n = 1...6 or a copolyester of the general formula I having different n's or a derivative of these and a second switching segment is based essentially on a polyacrylate of the general formula II where R is H or CH₃ and R₁ is cyclohexyl or where R and R₁ are both CH₃ or where R is CH₃ and R₁ is 2-hydroxyethyl,
and wherein p and q are selected such that the first and the second switching segment each form through phase separation in the solid state, a separate phase in the shape memory polymer which each have at least one transition temperature (T_{trans,1}, T_{trans,2}) which are capable of each fixing a temporary shape at the same time, so that the polymer once programmed can assume at least two temporary shapes (TF1, TF2)
in addition to a permanent shape (PF), depending on the temperature

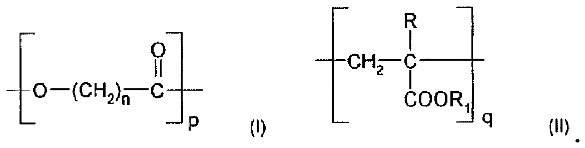

2. Shape memory polymer according to Claim 1, **characterized in that** the first switching segment comprises a poly(ε-caprolactone) segment where n = 5 or a derivative thereof in which the aliphatic carbon atoms, independently of each other, may be substituted with one or two, branched or unbranched, saturated or unsaturated C1 to C6 radicals.

3. Shape memory polymer according to any one of the preceding claims, **characterized in that** the first switching segment has an average molecular weight in the range from 2000 to 100 000 g/mol, particularly from 5000 to 40 000 g/mol, preferably of about 10 000 g/mol.

4. Shape memory polymer according to any one of the preceding claims, **characterized in that** a mass fraction of the polyester segment in the shape memory polymer is in the range from 25% to 75%, particularly in the range from 30% to 70%, preferably in the range from 50% to 60%.

5. Shape memory polymer according to any one of the preceding claims, **characterized in that** the shape memory polymer is an AB polymer network in which polyacrylate segments are crosslinked by polyester chains bound terminally at both ends.

6. Method of preparing a shape memory polymer according to any one of Claims 1 to 5, which comprises a polyester macromonomer of the general formula Ia where n = 1...6 and Y is a binding radical or a copolyester macromonomer of the general formula Ia having different n's or a derivative of these and an acrylic monomer of the general formula IIa where, in formula IIa, R is H or CH₃ and R₁ is cyclohexyl or where R and R₁ are both CH₃ or where R is CH₃ and R₁ is 2-hydroxyethyl and, in formula Ia, the first end group R₂ and/or the second end group R₃ are each independently a polymerizable radical, being copolymerized

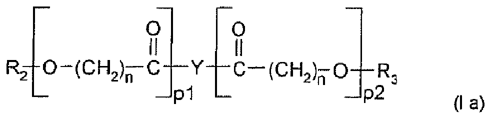

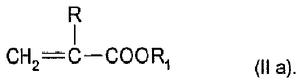

7. Method according to Claim 6, **characterized in that** R₂ and R₃ of the polyester component are each a polymerizable radical.

8. Method according to Claim 7, **characterized in that** the first end group R₂ and/or the second end group R₃ of the polyester component are an acryloyl or methacryloyl radical, more particularly are each a methacryloyl radical.

9. Method of programming at least two temporary shapes (TF1, TF2) in a shape memory polymer according to any one of Claims 1 to 5, comprising the steps
(a) converting the shape memory polymer at a temperature above the upper transition temperature (T_{trans,1}) into a shape corresponding to the first temporary shape (TF1),
(b) cooling to a temperature below the upper transition temperature (T_{trans,1}) while fixing the first temporary shape (TF1),
(c) converting the shape memory polymer at a temperature above the lower transition temperature (T_{trans,2}) and below the upper transition temperature (T_{trans,1}) into a shape corresponding to the second temporary shape (TF2), and
(d) cooling to a temperature below the lower transition temperature (T_{trans,2}) while fixing the second temporary shape (TF2).

10. Method according to Claim 9, **characterized in that** the cooling in step (b) is to a temperature below the upper transition temperature (T_{trans,1}) and above the lower transition temperature (T_{trans,2}) or to a temperature below the lower transition temperature (T_{trans,2}).

## Revendications

1. Polymère à mémoire de forme, qui comprend au moins deux segments commutés, le polymère à mémoire de forme étant un réseau polymère AB, dans lequel un des segments commutés se trouve sous forme réticulée par l'autre segment commuté, lié des deux côtés en position terminale,
un premier segment commuté étant sensiblement à base d'un polyester de formule générale I avec n = 1...6 ou d'un copolyester de formule générale I avec une valeur n différente ou d'un dérivé de ceux-ci, et un deuxième segment commuté étant sensiblement à base d'un polyacrylate de formule générale II, R représentant H ou CH₃ et R₁ signifiant un radical cyclohexyle ou R et R₁ signifiant chacun CH₃ ou R signifiant CH₃ et R₁ signifiant un radical 2-hydroxyéthyle,
p et q étant choisis de manière telle que le premier et le deuxième segment commuté forment, dans le polymère à mémoire de forme, par une séparation de phases dans le corps solide, une phase propre présentant à chaque fois au moins une température de transition (Tₜᵣₐₙₛ₁, Tₜᵣₐₙₛ₂) et sont aptes à prendre simultanément une forme temporaire respective de façon à ce que le polymère puisse prendre après sa programmation, en fonction de la température, outre une forme permanente (PF) au moins deux formes temporaires (TF1, TF2)

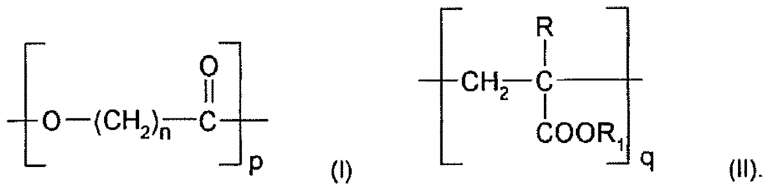

2. Polymère à mémoire de forme selon la revendication 1, **caractérisé en ce que** le premier segment commuté comprend un segment de type poly(ε-caprolactone) avec n = 5 ou un dérivé de celui-ci, dans lequel les atomes de carbone aliphatiques peuvent être substitués, indépendamment l'un de l'autre, par un ou deux radicaux en C₁-C₆ non ramifiés ou ramifiés, saturés ou insaturés.

3. Polymère à mémoire de forme selon l'une quelconque des revendications précédentes, **caractérisé en ce que** le premier segment commuté présente un poids moléculaire moyen dans la plage de 2000 à 100 000 g/mole, en particulier de 5000 à 40 000 g/mole, de préférence d'environ 10 000 g/mole.

4. Polymère à mémoire de forme selon l'une quelconque des revendications précédentes, **caractérisé en ce qu'**une proportion massique du segment de polyester dans le polymère à mémoire de forme se situe dans la plage de 25 à 75%, en particulier dans la plage de 30 à 70%, de préférence dans la plage de 50 à 60%.

5. Polymère à mémoire de forme selon l'une quelconque des revendications précédentes, **caractérisé en ce que** le polymère à mémoire de forme est un réseau polymère AB, dans lequel les segments de polyacrylate se trouvent sous forme réticulée par des chaînes polyester liées des deux côtés en position terminale.

6. Procédé pour la préparation d'un polymère à mémoire de forme selon l'une quelconque des revendications 1 à 5, dans lequel un macromonomère de polyester de formule générale Ia, où n = 1...6 et Y représente un radical de liaison, ou un macromonomère de copolyester de formule générale la avec une valeur n différente ou un dérivé de celui-ci, et un monomère d'acrylate de formule générale IIa, où dans la formule IIa, R représente H ou CH₃ et R₁ signifie un radical cyclohexyle ou R et R₁ signifient chacun CH₃ ou R signifie CH₃ et R₁ signifie un radical 2-hydroxyéthyle et dans la formule Ia, le premier groupe terminal R₂ et/ou le deuxième groupe terminal R₃ signifient indépendamment l'un de l'autre un radical polymérisable, sont copolymérisés

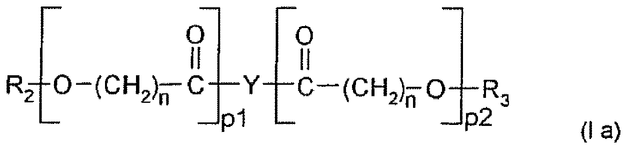

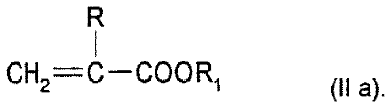

7. Procédé selon la revendication 6, **caractérisé en ce que** R₂ et R₃ du composant de polyester représentent chacun un radical polymérisable.

8. Procédé selon la revendication 7, **caractérisé en ce que** le premier groupe terminal R₂ et/ou le deuxième groupe terminal R₃ du composant de polyester commuté représente(nt) un radical acryle ou méthacryle, en particulier chacun un radical méthacryle.

9. Procédé pour la programmation d'au moins deux formes temporaires (TF1, TF2) d'un polymère à mémoire de forme selon l'une quelconque des revendications 1 à 5, présentant les étapes
(a) transformation du polymère à mémoire de forme dans une forme correspondant à la première forme temporaire (TF1) à une température au-dessus de la température de transition supérieure (T_{trans,1}),
(b) refroidissement à une température au-dessous de la température de transition supérieure (T_{trans,1}) avec fixation de la première forme temporaire (TF1),
(c) transformation du polymère à mémoire de forme dans une forme correspondant à la deuxième forme temporaire (TF2) à une température au-dessus de la température de transition inférieure (T_{trans,2}) et au-dessous de la température de transition supérieure (T_{trans,1}) et
(d) refroidissement à une température au-dessous de la température de transition inférieure (T_{trans,2}) avec fixation de la deuxième forme temporaire (TF2).

10. Procédé selon la revendication 9, **caractérisé en ce qu'**on refroidit dans l'étape (b) à une température au-dessous de la température de transition supérieure (T_{trans,1}) et au-dessus de la température de transition inférieure (T_{trans,2}) ou à une température au-dessous de la température de transition inférieure (T_{trans,2}).
